# FASCICULE DE BREVET EUROPEEN

(11) **EP 1 536 590 B1**
(45) Date de publication et mention de la délivrance du brevet: **30.08.2006**
(21) Numéro de dépôt: 04300690.7
(22) Date de dépôt: 18.10.2004
(51) Int. Cl.: H04L 5/02, H04L 27/26, H04B 1/69

(54) **Procédé de réception d'un signal de télécommunication**
Verfahren zum Empfang eines Nachrichtensignals
Method of reception for a telecommunications signal

(30) Priorité: 16.10.2003 FR 0350695
(43) Date de publication de la demande: 01.06.2005
(73) Titulaire: SAGEM Communication, 75015 Paris (FR)
(72) Inventeur: Samy, Roger, 78457 Velizy Cedex (FR)
(74) Mandataire: Schmit, Christian Norbert Marie

(56) Documents cités:
- WO-A-01/20840
- US-A1- 2002 181 562

## Description

La présente invention à pour objet un procédé de réception d'un signal de télécommunication. Elle est plus particulièrement utilisée dans le domaine des liaisons filaires, que se soit à l'aide de protocoles de types DSL (pour Digital Subscriber Line - ligne numérique de connexion d'abonnés) ou à l'aide de protocoles de type courant porteur. L'invention pourrait toutefois être mise en oeuvre dans le domaine des liaisons hertziennes.

Le domaine de l'invention est aussi celui des liaisons dans lesquelles des signaux numérisés à transmettre sont codés par des codages de type CDMA (Coded Division Multiple Access) ou AMRC (accès multiple à répartition par le code). Avec ces codages, deux types de modulation sont envisagés : soit des modulations à large bande soit des modulations de types mutiporteuses. L'invention concerne essentiellement le domaine des modulations multiporteuses.

Par ailleurs, les modulations multiporteuses envisagées seront réalisées en bande de base. Mais la transposition de l'invention à des transmissions hertziennes, pour lesquelles le recours à une porteuse très haute fréquence est employée, serait également envisageable.

Le but de l'invention, dans le domaine ainsi évoqué est de simplifier le travail des récepteurs qui doivent s'adapter aux défauts imposés par le canal par lequel ils reçoivent les signaux provenant d'un émetteur.

On connaît, notamment par la demande de brevet US-A-2002/0181562 , un procédé de transmission de données de type CDMA multiporteuse. Les problèmes liés aux détériorations du signal transmis, provoquées par le canal, sont résolus par l'utilisation d'un filtre égaliseur. En pratique, un tel filtre égaliseur fait intervenir des signaux reçus à une période donnée en combinaison avec des signaux reçus à une période antérieure. Cette combinaison résout les problèmes d'échos et de retards de transmission. En pratique, compte tenu d'une part de la rémanence, de la mémorisation (M) du canal, et d'autre part du coefficient (N) d'étalement de codage de type CDMA, un tel filtre égaliseur a à traiter un nombre M fois N d'échantillons à chaque réception d'un symbole.

Le filtrage d'égalisation, dans le domaine numérique, revient à multiplier une matrice d'échantillons ainsi évoquée, de M par N termes par une matrice de filtrage de N par M coefficients. La multiplication de deux telles matrices conduit, pour l'élaboration d'un terme de la matrice résultat, à M multiplications suivies de M additions. Comme il y a N fois M termes dans la matrice résultat, on est donc conduit à un nombre correspondant de multiplications et d'additions. Ce nombre correspondant devient prohibitif lorsque la rémanence M du canal est grande, et ou lorsque l'étalement N par les codes est important.

Dans la pratique dans la suite de cet exposé, on choisira de prendre un nombre N de code d'étalement égal à soixante-quatre (64) et un nombre M de symboles utilisés pour tenir compte de la rémanence du canal égal à cent vingt-huit (128). Les chiffres ainsi donnés n'ont aucune signification de limitation de la portée de l'invention. Ils permettront seulement de mieux expliquer l'effet technique de celle-ci.

Dans l'invention on a considéré que le nombre de calculs à effectuer qui était ainsi de N x M x (M + N) était une charge de travail trop importante pour un processeur de récepteur, compte tenu d'une quantification des signaux reçus sur seize, voire vingt-quatre bits. En effet un tel calcul doit être réentrepris à la cadence symbole.

Dans l'invention pour résoudre ce problème, on a tiré parti de deux idées. Premièrement, si la matrice de filtrage est une matrice diagonale, (dans le cas où M égal N) bien entendu le nombre d'opérations est réduit. On a donc cherché à diagonaliser, la matrice de filtrage. En agissant ainsi, on s'est deuxièmement rendu compte que, dans le cas ou une telle diagonalisation était employé, on pouvait notablement résoudre le problème de la quantité de calculs (de la quantité de multiplications à effectuer) en imaginant de multiplier la matrice échantillons par un premier vecteur ligne et d'obtenir ainsi une matrice échantillon corrigée et, à partir de cette matrice échantillon corrigée, à la multiplier par un vecteur colonne de manière à obtenir la matrice résultat. En agissant ainsi, pour chaque phase, on a un nombre N x M de multiplications, et il n'y a pas d'addition. Le nombre total de multiplications est donc de 2 x N x M. En définitive, on a réduit la charge de travail du processeur par le facteur M.

L'invention a donc pour objet un procédé de réception d'un signal de télécommunication, de type multifréquence et de type à accès multiple à répartition par le code, dans lequel
- on démodule le signal reçu et on produit un signal démodulé,
- on décompose et on transforme le signal démodulé pour produire un premier ensemble matriciel de signaux décomposés,
- on filtre en égalisation le premier ensemble matriciel de signaux décomposés pour produire un signal résultat,
caractérisé en ce que pour filtrer
- on multiplie, pour toutes les colonnes du premier ensemble matriciel de signaux décomposés, chacun des termes d'une colonne de ce premier ensemble matriciel de signaux décomposés par un coefficient d'un premier filtre ligne, le rang de la colonne dans le premier ensemble matriciel correspondant au rang de colonne du coefficient dans le filtre ligne, et on obtient un deuxième ensemble matriciel de signaux décomposés, et
- on multiplie, pour toutes les lignes du deuxième ensemble matriciel de signaux décomposés, chacun des termes d'une ligne de ce deuxième ensemble matriciel de signaux décomposés par un coefficient d'un deuxième filtre colonne, le rang de la ligne dans le deuxième ensemble matriciel correspondant au rang de ligne du coefficient dans le deuxième filtre colonne, et on obtient un troisième ensemble matriciel de signaux décomposés formant le signal résultat.

L'invention a également pour objet un procédé de réception d'un signal de télécommunication, de type multifréquence et de type à accès multiple à répartition par le code, dans lequel
- on démodule le signal reçu et on produit un signal démodulé,
- on décompose et on transforme le signal démodulé pour produire un premier ensemble matriciel de signaux décomposés,
- on filtre en égalisation le premier ensemble matriciel de signaux décomposés pour produire un signal résultat,
caractérisé en ce que pour filtrer
- on multiplie, pour toutes les colonnes du premier ensemble matriciel de signaux décomposés, chacun des termes d'une colonne de ce premier ensemble matriciel de signaux décomposés par un coefficient d'un premier filtre ligne, le rang de la colonne dans le premier ensemble matriciel correspondant au rang de colonne du coefficient dans le filtre ligne, et on obtient un deuxième ensemble matriciel de signaux décomposés,
- on permute par une rotation de 90° le deuxième ensemble matriciel de signaux décomposés,
- on multiplie, pour toutes les colonnes du deuxième ensemble matriciel de signaux décomposés ainsi tourné, chacun des termes d'une ligne du deuxième ensemble matriciel ainsi tourné de signaux décomposés par un coefficient d'un deuxième filtre ligne, le rang de la colonne dans le deuxième ensemble matriciel ainsi tourné correspondant au rang de colonne du coefficient dans le deuxième filtre ligne, et
- on obtient un troisième ensemble matriciel de signaux décomposés formant le signal résultat.

Dans l'exposé de l'invention on utilise les termes de ligne et de colonne parce que ces termes se prêtent à une représentation mathématique simple du traitement à effectuer. Cependant, ces termes sont interchangeables et on pourrait considérer que sont des colonnes les termes portés dans des lignes, et que sont des lignes les termes portés dans des colonnes. Pour tout l'exposé de l'invention, on retiendra la forme normale académique de ces termes, la portée de l'invention devant être appréciée en donnant, le cas échéant, à ces termes des significations interverties.

L'invention sera mieux comprise à la lecture de la description qui suit à l'examen des figures qui l'accompagnent. Celles-ci ne sont présentées qu'à titre indicatif et nullement limitatif de l'invention. Les figures montrent :
- Figure 1 : un dispositif d'émission et de réception montrant la mise en oeuvre du procédé selon l'invention ;
- Figure 2: une représentation schématique de symboles, et plus généralement de signaux numériques échangés dans le dispositif et le procédé représenté sur la figure 1 ;
- Figure 3 : des détails d'étalement de symboles par les codes.

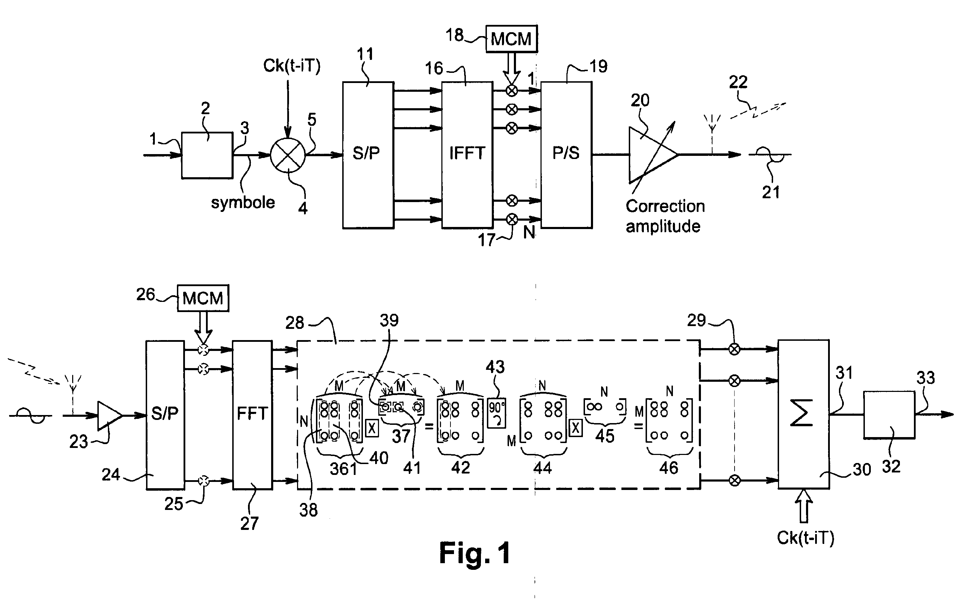

La figure 1 montre un dispositif utile pour mettre en oeuvre le procédé de réception d'un signal de télécommunication de l'invention. Sur la partie supérieure, des signaux à transmettre disponibles sur une entrée 1 d'un codeur de source 2 sont transformés en des symboles disponibles à la sortie 3 du codeur 2. Les signaux disponibles à la sortie 3 sont envoyés à un codeur de canal 4 de type CDMA. Le codeur 4 reçoit par ailleurs des signaux de codages Ck(t - iT) permettant de coder un symbole, le résultat de ce codage étant disponible à une sortie 5 du codeur 4.

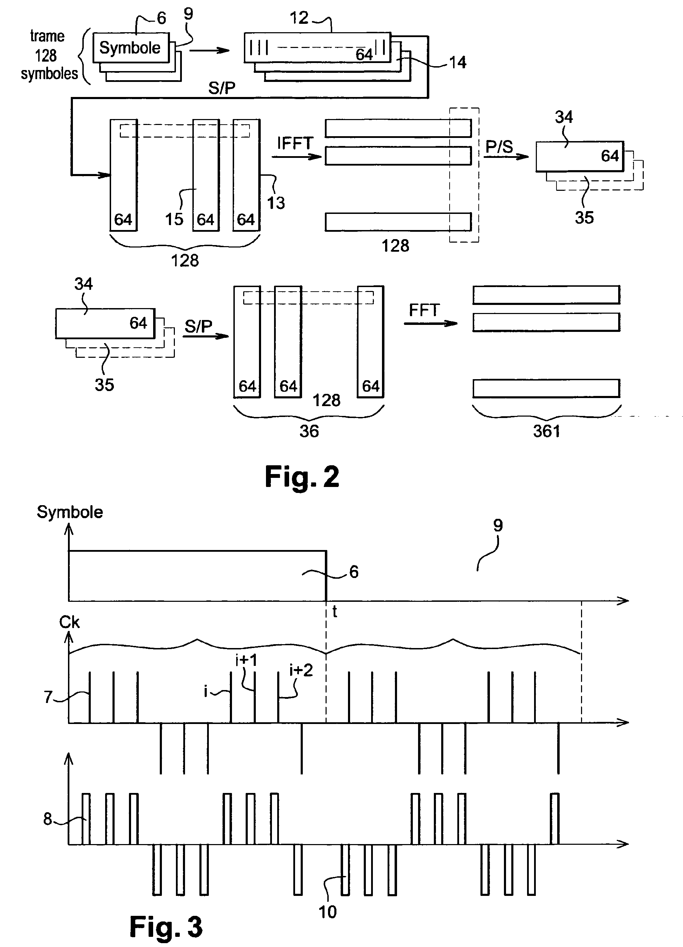

La figure 3 montre pour un symbole 6 à transmettre, et qui est multiplié par des signaux 7 de codage, des signaux échantillonnés codés 8 disponibles à la sortie 5. Les signaux 8 sont appelés couramment des chips. La partie haute du diagramme temporel de la figure 3 montre un symbole 6 d'un état binaire donné (par exemple à 1). La partie intermédiaire de la figure 3 montre une séquence de signaux de codage 7, séparés les uns des autres d'une durée T. Les signaux 7 ont pour objet d'affecter par multiplication la valeur du symbole numérique 6. La séquence des codes Ck est une séquence propre à une voie de transmission. Une autre voie de transmission qui utiliserait un même médium physique de transmission serait véhiculée par des signaux codés avec des codes Ck' tels que les codes Ck et les codes Ck' seraient orthogonaux entre eux.

D'une manière schématique on a montré que les codes Ck pouvaient avoir la valeur plus un ou moins un. Le résultat du codage du symbole 6 par les codes Ck a l'apparence d'une série d'impulsions, d'une série d'états logiques, dans un état binaire ou un autre en fonction de l'état des codes Ck. La figure 3 montre par ailleurs pour un autre symbole 9 émis après la date t de la fin du symbole 6, et pour la même séquence de codage de code Ck, un dessin inversé des échantillons codés 10 par rapport aux échantillons codés 8, du fait du changement d'état du symbole 9 par rapport au symbole 6.

La modulation multiporteuse des signaux échantillonnés ainsi codés et plus facilement réalisés si, partant des signaux temporels 8 et 10 de la figure 3, on passe dans le domaine fréquenciel. Dans ce but, un émetteur comporte normalement un convertisseur série parallèle 11, connecté en sortie du codeur 4. Le convertisseur 11 produit ainsi des paquets de signaux codés, en parallèle, correspondant à l'ensemble des échantillons codés pour un symbole. Sur la figure 2, on a montré qu'un symbole 6 était ainsi transformé par le codeur 4 en un paquet 12 d'échantillons codés se succédant dans le temps. Dans l'exemple retenu, on a choisit un facteur d'étalement de 64 et donc en pratique le paquet 12 comporte 64 échantillons codés. Le convertisseur série parallèle 11 a pour objet de transformer le paquet séquentiel 12 en un paquet parallèle 13, sur 64 sorties parallèles. Ce travail de codage et de conversion série parallèle se produit aussi pour les symboles suivants, notamment le symbole 9 transformé en paquet 14, lui même transformé en un paquet parallèle 15. Ainsi de suite, un ensemble M de paquets d'échantillons est codé. Dans l'exemple de la figure 2, M égale 128.

Cet ensemble de paquets d'échantillons codés est ensuite transformé, par un circuit de transformée de Fourier 16 pour faire passer du domaine temporel au domaine fréquentiel l'ensemble des paquets 13, 15 d'échantillons codés. A la sortie du transformateur 16, les signaux sont donc représentatifs de composantes fréquentielles et peuvent être modulés par des modulateurs tels que 17 (figure 1).

Les modulateurs 17 reçoivent des signaux de fréquences produits par un oscillateur multiporteuse MCM 18. Sur le plan pratique les porteuses multiples sont suffisamment séparées les unes des autres pour qu'à la réception on puisse considérer les composantes fréquentielles comme orthogonales les unes des autres, et indépendantes les unes des autres. Les modulateurs 17 comportent notamment des modulateurs de phase.

Les signaux disponibles à la sortie des modulateurs 17 sont des signaux temporels. Ils sont sérialisés par un convertisseur parallèle série 19. Les signaux série en résultant sont envoyés à un amplificateur de correction d'amplitude 20, avant d'être appliqué sur le médium de transmission. Ce médium de transmission peut comporter une transmission de type filaire 21.

Il pourrait néanmoins également comporter des transmissions de type hertzien 22, un dispositif complémentaire étant prévu en réception. Dans le cas d'une liaison filaire, la transmission est en bande de base. Toutefois, en transmission filaire de même qu'en transmission hertzienne une modulation haute fréquence peut être envisagée, suivie en réception d'une démodulation correspondante.

En réception, des opérations inverses des précédentes sont entreprises. Notamment, à la sortie d'un amplificateur de réception 23, un convertisseur 24 série parallèle permet d'accéder en parallèle à des démodulateurs tels que 25. Les démodulateurs 25 reçoivent par ailleurs des signaux de porteuse provenant d'un générateur de fréquences de modulation 26 comparable au générateur 18. En bande de base, la démodulation est de type multiporteuse. Rien n'empêcherait toutefois que le codage de type CDMA soit large bande. Pour justifier l'utilisation de l'invention, on peut par ailleurs vouloir limiter les effets de superposition, dans le signal reçu, de symboles successifs émis. Dans ce but on peut augmenter des intervalles de garde à l'émission. En sortie des démodulateurs 25, un circuit 27 de transformée de Fourier, inverse du circuit 16 précédent, replace l'ensemble des paquets d'échantillons reçus dans le domaine temporel. Pour des raisons de simplification de réalisation, le circuit 16 est un circuit de transformé de Fourier inverse alors que le circuit 27 est un circuit de transformé de Fourier directe.

Dans l'état de la technique, ainsi que dans l'invention, un égaliseur 28 traite ces ensembles de paquets d'échantillons, au rythme symbole, pour produire des ensemble de paquets d'échantillons traités. Puis ces échantillons traités eux-mêmes sont décodés par des décodeurs 29 recevant chacune la séquence des signaux de codage Ck(t - iT). Les signaux ainsi décodés sont à leur tour transformés par un convertisseur parallèle série, en pratique un additionneur 30. En sortie 31 de l'additionneur 30 sont donc disponibles les symboles tels qu'ils avaient été émis à la sortie du codeur de source 2. Un décodeur de source 32 effectue alors le traitement inverse pour restituer à sa sotie 33 les signaux qui avaient été injectés dans le codeur de source 2.

La particularité de l'invention se situe dans la structure de l'égaliseur 28. En effet, figure 2, en réception, des paquets de signaux transformés 34 et 35 sont disponibles à la sortie du convertisseur 19. Ils sont disponibles sous la forme de paquets successifs dans le temps. Ces paquets 34 et 35 sont aussi ceux disponibles après transmission par l'amplificateur 23 et après conversion par le convertisseur 24. Ces paquets 34, 35 sont transformés en des ensembles 36 de M paquets (128). Ces ensembles 36 eux-mêmes, après transformation par le transformateur 27 (et démodulation), se présentent sous la forme d'ensemble de paquets 361 de M fois N échantillons.

Dans la pratique chaque échantillon du paquet 361 peut être quantifié sur une dynamique importante, seize bits, vingt-quatre bits voire plus, ce qui complique d'autant le travail de l'égaliseur 28.

Dans l'invention, à partir du paquet 361 (figure 1) du premier ensemble matriciel de signaux ainsi décomposés, on effectue une multiplication par un premier filtre ligne 37. La multiplication est une multiplication simple. Dans celle-ci, les N termes d'une colonne 38 du paquet 361 sont multipliés par un terme 39 du premier filtre ligne 37. Le rang de la colonne, ici le rang numéro un pour la colonne 38, correspond au rang du coefficient multiplicateur du filtre ligne, ici le rang numéro un pour le coefficient 39. On procède de même pour une colonne adjacente 40 du paquet 361 pour laquelle chacun des termes est multiplié par un coefficient adjacent 41 du coefficient 39 dans le premier filtre ligne 37. Ainsi de suite, jusqu'à ce que tous les termes du paquet 361 aient été traités. Bien entendu dans ce cas, le filtre ligne 37 comporte M coefficients. On constate qu'en agissant ainsi on a procédé à M x N multiplications, et qu'il n'y a pas d'addition. On obtient un ensemble corrigé 42 lui également avec M x N termes.

Pour la deuxième multiplication consécutive à la première, deux solutions sont possibles. Soit on fait tourner par l'intermédiaire d'un rotateur 43 l'ensemble 42 pour que les lignes deviennent, dans l'ensemble 44 résultant, des colonnes, et les colonnes des lignes. L'ensemble 42 tourne alors d'un bloc, chaque terme gardant sa place dans l'ensemble. On multiplie alors chacun des termes d'une ligne de l'ensemble matriciel ainsi tourné 44 par un coefficient d'un deuxième filtre ligne 45. Le rang d'une colonne dans le deuxième ensemble matriciel 44 correspond au rang dans la ligne du coefficient du deuxième filtre ligne 45 par lequel chacun des termes de cette colonne est multiplié. Et on obtient un troisième ensemble matriciel de signaux décomposés formant le signal résultat 46.

En variante, plutôt que d'utiliser un rotateur (dont la présence ici ne sert qu'à expliquer l'invention mais ne correspond à aucune réalité de réalisation), on peut prévoir de multiplier chacun des termes d'une ligne du deuxième ensemble matriciel 42 de signaux décomposés, par un coefficient d'un deuxième filtre colonne (non représenté). Le rang de la ligne dans le deuxième ensemble matriciel correspondrait alors au rang de la ligne du coefficient dans le deuxième filtre colonne. On obtiendrait de la même façon le troisième ensemble matriciel 46 de signaux décomposé formant le signal résultat.

Dans la pratique les deux solutions sont duales.

Etant donné que les ensembles matriciels sont stockés dans des mémoires, les multiplications des termes d'une colonne par un coefficient, ou des termes d'une ligne par un coefficient, reviennent en pratique à modifier l'adressage de lecture de la mémoire dans laquelle est stocké l'ensemble matriciel. De multiples solutions sont donc possibles avec ou sans utilisation d'un rotateur.

On a ici évoqué la multiplication de l'ensemble matriciel 36 par un filtre ligne 37, puis la multiplication du résultat intermédiaire par un filtre colonne. Cependant il serait tout à fait possible d'envisager de faire une multiplication d'abord par un filtre colonne, puis de multiplier le résultat intermédiaire par un autre filtre ligne. De même il serait envisageable de ne réaliser des multiplications que par des filtres colonnes. C'est dans ce sens que, plus haut, il a été indiqué que les appellations lignes et colonnes pouvaient être interverties. Dans tous les cas, il y a multiplication par deux filtres vectoriels, pas matriciels, portant successivement sur les lignes (ou les colonnes) puis sur les colonnes (ou les lignes) de la matrice d'échantillons.

La solution ainsi présentée à l'avantage d'être bien plus simple à mettre en oeuvre.

La question qui reste à résoudre est le calcul des valeurs des coefficients des filtres lignes 37 et 45 (ou d'un filtre colonne équivalent dans le cas d'une interversion). Dans la pratique il faut ainsi déterminer M + N coefficients. La solution retenue par l'invention est une solution par apprentissage. Une solution analytique est toutefois possible en exploitant la diagonalisation citée ci-dessus.

Dans un tel apprentissage, il suffit d'envoyer, par exemple, un ensemble suffisant de symboles connus, par exemple M symboles, et de disposer ainsi de M x N échantillons en réception. Les échantillons de départ étant connus, il est possible de pratiquer une régression sur des valeurs des M + N coefficients pour déterminer leur valeur avec suffisamment de précision. Avec les valeurs indiquées ci-dessus, le nombre de coefficients à déterminer est de 196 (128 plus 64) alors que le nombre d'échantillons transmis serait de 128 x 64, c'est bien suffisant. On disposerait ainsi d'un système de 128 x 64 équations à 196 inconnus. La durée d'apprentissage est donc courte.

Une telle démarche se prête par ailleurs bien à des transmissions sur lignes d'abonnés ou à des transmissions par courants porteurs pour lesquels les détériorations apportées par le canal sont relativement stationnaires, et peuvent ne nécessiter l'adaptation des coefficients de filtre que peu souvent, par exemple cinq à dix fois par heure seulement. Au besoin, un envoi régulier d'échantillons connus permet d'affiner régulièrement le calcul des coefficients M et N de filtre. Dans le domaine des transmissions hertziennes, l'invention est également transposable. Toutefois la fréquence de recalcul des coefficients de filtre doit être augmentée, par exemple à chaque durée de trame.

L'invention est particulièrement utile lorsque les codages de types CDMA sont vastes, notamment lorsqu'ils sont supérieurs à 32. Pour des codages de type CDMA avec des facteurs d'étalement de 256 ou de 512 l'invention est quasiment indispensable.

## Revendications

1. Procédé de réception d'un signal de télécommunication, de type multifréquence (18) et de type à accès multiple à répartition par le code (AMRC), dans lequel
- on démodule (25) le signal reçu et on produit un signal démodulé,
- on décompose (27) et on transforme le signal démodulé pour produire un premier ensemble (361) matriciel de signaux décomposés,
- on filtre (28) en égalisation le premier ensemble matriciel de signaux décomposés pour produire un signal résultat,
**caractérisé en ce que** pour filtrer
- on multiplie, pour toutes les colonnes (38, 40) du premier ensemble matriciel de signaux décomposés, chacun des termes d'une colonne de ce premier ensemble matriciel de signaux décomposés par un coefficient (39, 41) d'un premier filtre ligne (37), le rang de la colonne (38) dans le premier ensemble matriciel correspondant au rang de colonne du coefficient (39) dans le filtre ligne, et on obtient un deuxième ensemble (42) matriciel de signaux décomposés, et
- on multiplie, pour toutes les lignes du deuxième ensemble matriciel de signaux décomposés, chacun des termes d'une ligne de ce deuxième ensemble matriciel de signaux décomposés par un coefficient d'un deuxième filtre colonne, le rang de la ligne dans le deuxième ensemble matriciel correspondant au rang de ligne du coefficient dans le deuxième filtre colonne, et on obtient un troisième ensemble matriciel de signaux décomposés formant le signal résultat.

2. Procédé de réception d'un signal de télécommunication, de type multifréquence (18) et de type à accès multiple à répartition par le code (AMRC), dans lequel
- on démodule (25) le signal reçu et on produit un signal démodulé,
- on décompose (27) et on transforme le signal démodulé pour produire un premier ensemble (361) matriciel de signaux décomposés,
- on filtre (28) en égalisation le premier ensemble matriciel de signaux décomposés pour produire un signal résultat,
**caractérisé en ce que** pour filtrer
- on multiplie, pour toutes les colonnes (38, 40) du premier ensemble matriciel de signaux décomposés, chacun des termes d'une colonne de ce premier ensemble matriciel de signaux décomposés par un coefficient (39, 41) d'un premier filtre ligne, le rang de la colonne (38) dans le premier ensemble matriciel correspondant au rang de colonne du coefficient (39) dans le filtre ligne, et on obtient un deuxième ensemble (42) matriciel de signaux décomposés,
- on permute (43) par une rotation de 90° le deuxième ensemble matriciel de signaux décomposés,
- on multiplie, pour toutes les colonnes du deuxième ensemble matriciel de signaux décomposés ainsi tourné (44), chacun des termes d'une ligne du deuxième ensemble matriciel ainsi tourné de signaux décomposés par un coefficient d'un deuxième filtre ligne (45), le rang de la colonne dans le deuxième ensemble matriciel ainsi tourné correspondant au rang de colonne du coefficient dans le deuxième filtre ligne, et
- on obtient un troisième ensemble matriciel (46) de signaux décomposés formant le signal résultat.

3. Procédé selon l'une des revendications 1 à 2, **caractérisé en ce que** pour simplifier la réception, en émission on procède à une transformée de Fourier inverse (16) et en réception à une transformée de Fourier directe (27) du signal de télécommunication.

4. Procédé selon l'une des revendications 1 à 3, **caractérisé en ce qu**'on démodule, en bande de base, le signal reçu par un démodulateur (25) de type multiporteuse.

5. Procédé selon l'une des revendications 1 à 3, **caractérisé en ce qu**'on démodule, en bande de base, le signal reçu par un démodulateur de type large bande.

6. Procédé selon l'une des revendications 1 à 5, **caractérisé en ce qu**'on neutralise par des intervalles de garde de durée suffisante des effets de superposition des symboles dans le signal reçu.

7. Procédé selon l'une des revendications 1 à 6, **caractérisé en ce qu**'on détermine les coefficients des filtres par apprentissage.

## Claims

1. Method for reception of a telecommunications signal of multi-frequency type (18) and code-division multiple access (CDMA) type in which
- the signal received is demodulated (25) and a demodulated signal is produced,
- the demodulated signal is broken down (27) and transformed to produce a first matrix (361) of broken down signals,
- the first matrix of broken down signals is subjected to equalising filtering (28) to produce a result signal, ***characterised in that*** for filtering
- in all the columns (38, 40) of the first matrix of broken down signals each of the terms of a column of this first matrix of broken down signals is multiplied by a coefficient (39, 41) of a first line filter (37), the rank of the column (38) in the first matrix corresponding to the column rank of the coefficient (39) in the line filter, and a second matrix (42) of broken down signals is obtained, and
- in all the lines of the second matrix of broken down signals each of the terms of a line of this second matrix of broken down signals is multiplied by a coefficient of a second column filter, the rank of the line in the second matrix corresponding to the line rank of the coefficient in the second column filter, and a third matrix of broken down signals is obtained forming the result signal.

2. Method for reception of a telecommunications signal of multi-frequency type (18) and code-division multiple access (CDMA) type, in which
- the signal received is demodulated (25) and a demodulated signal is produced,
- the demodulated signal is broken down (27) and transformed to produce a first matrix (361) of broken down signals,
- the first matrix of broken down signals is subjected to equalising filtering (28) to produce a result signal, ***characterised in that*** for filtering
- in all the columns (38, 40) of the first matrix of broken down signals each of the terms of a column of this first matrix of broken signals is multiplied by a coefficient (39, 41) of a first line filter, the rank of the column (38) in the first matrix corresponding to the column rank of the coefficient (39) in the line filter, and a second matrix (42) of broken down signals is obtained,
- the second matrix of broken down signals is switched (43) by rotation through 90°,
- in all the columns of the second matrix of broken down signals thus rotated (44) each of the terms of a line of the second matrix of broken down signals thus rotated is multiplied by a coefficient of a second line filter (45), the rank of the column in the second matrix thus rotated corresponding to the column rank of the coefficient in the second line filter, and
- a third matrix (46) of broken down signals is obtained forming the result signal.

3. Method according to one of claims 1 to 2, ***characterised in* that** to simplify reception, the telecommunications signal is subjected to an inverse Fourier transform (16) when transmitting and to a direct Fourier transform (27) when receiving.

4. Method according to one of claims 1 to 3, ***characterised in that*** the signal received is demodulated by a demodulator (25) of multi-carrier type in the base band.

5. Method according to one of claims 1 to 3, ***characterised in that*** the signal received is demodulated by a demodulator of broadband type in the base band.

6. Method according to one of claims 1 to 5, ***characterised in that*** the effects of overlaying of the symbols in the signal received are neutralised by holding intervals of sufficient duration.

7. Method according to one of claims 1 to 6, ***characterised in that*** the coefficients of the filters are determined by learning.

## Patentansprüche

1. Verfahren zum Empfang von Multifrequenz-Telekommunikationssignalen (18) und Codemultiplex-Telekommunikationssignalen (CDMA), wobei
- das empfangene Signal demoduliert (25) und ein demoduliertes Signal erzeugt wird,
- das demodulierte Signal zerlegt (27) und transformiert wird, um eine erste Matrix (361) aus zerlegten Signalen zu erhalten,
- die erste Matrix aus zerlegten Signalen zur Entzerrung gefiltert wird, um ein resultierendes Signal zu erhalten,
**dadurch gekennzeichnet, dass** zum Filtern
- für alle Spalten (38, 40) der ersten Matrix aus zerlegten Signalen alle Elemente einer Spalte dieser ersten Matrix aus zerlegten Signalen mit einem Koeffizienten (39, 41) eines ersten Zeilenfilters (37) multipliziert werden , wobei die Spaltennummer der Spalte der ersten Matrix von zerlegten Signalen der Spaltennummer der Spalte des Koeffizienten des Zeilenfilters entspricht, und so eine zweite Matrix von zerlegten Signalen erhalten wird, und
- für alle Zeilen der zweiten Matrix aus zerlegten Signalen alle Elemente einer Zeile der zweiten Matrix von zerlegten Signalen mit einem Koeffizienten eines zweiten Spaltenfilters multipliziert werden, wobei die Zeilennummer der Zeile der zweiten Matrix aus zerlegten Signalen der Zeilennummer der Zeile des Koeffizienten des Spaltenfilters entspricht, und so eine dritte Matrix aus zerlegten Signalen erhalten wird, die das resultierende Signal darstellt.

2. Verfahren zum Empfang von Multifrequenz-Telekommunikationssignalen (18) und Codemultiplex-Telekommunikationssignalen (CDMA), wobei
- das empfangene Signal demoduliert (25) und ein demoduliertes Signal erzeugt wird,
- das demodulierte Signal zerlegt (27) und transformiert wird, um eine erste Matrix (361) aus zerlegten Signalen zu erhalten,
- die erste Matrix aus zerlegten Signalen zur Entzerrung gefiltert wird, um ein resultierendes Signal zu erhalten,
**dadurch gekennzeichnet, dass** zum Filtern
- für alle Spalten (38, 40) der ersten Matrix aus zerlegten Signalen alle Elemente einer Spalte dieser ersten Matrix aus zerlegten Signalen mit einem Koeffizienten (39, 41) eines ersten Zeilenfilters (37) multipliziert werden , wobei die Spaltennummer der Spalte der ersten Matrix von zerlegten Signalen der Spaltennummer der Spalte des Koeffizienten des Zeilenfilters entspricht, und so eine zweite Matrix von zerlegten Signalen erhalten wird, und
- die zweite Matrix aus zerlegten Signalen durch eine Drehung um 90° permutiert wird,
- für alle Spalten der zweiten, gedrehten Matrix (44) aus zerlegten Signalen alle Elemente einer Zeile der zweiten, gedrehten Matrix aus zerlegten Signalen mit einem Koeffizienten eines zweiten Zeilenfilters (45) multipliziert werden, wobei die Spaltennummer der Spalte der zweiten, gedrehten Matrix der Spaltennummer der Spalte des Koeffizienten des zweiten Zeilenfilters entspricht, und
- sich eine dritte Matrix (46) von zerlegten Signalen ergibt, die das resultierende Signal ergibt.

3. Verfahren nach Anspruch 1 oder 2, **dadurch gekennzeichnet, dass** zur Vereinfachung des Empfangs während des Sendens eine inverse Fouriertransformation (16) und beim Empfang eine direkte Fouriertransformation (27) des Telekommunikationssignals durchgeführt wird.

4. Verfahren nach einem der Ansprüche 1 bis 3, **dadurch gekennzeichnet, dass** das empfangene Signal im Basisband mit einem Mehrträger-Demodulator (25) demoduliert wird.

5. Verfahren nach einem der Ansprüche 1 bis 3, **dadurch gekennzeichnet, dass** das empfangene Signal im Basisband mit einem Breitband-Demodulator demoduliert wird.

6. Verfahren nach einem der Ansprüche 1 bis 5, **dadurch gekennzeichnet, dass** Superpositionseffekte von Symbolen im empfangenen Signal neutralisiert werden durch ausreichend lange Schutzintervalle.

7. Verfahren nach einem der Ansprüche 1 bis 6, **dadurch gekennzeichnet, dass** die Bestimmung der Filterkoeffizienten lernfähig ist.
